(19) **Europäisches Patentamt European Patent Office Office européen des brevets**

(11) **EP 2 733 929 B1**

(12) **FASCICULE DE BREVET EUROPEEN**

(45) Date de publication et mention de la délivrance du brevet:
**28.09.2016 Bulletin 2016/39**

(51) Int Cl.:
*H04N 5/357* (2011.01)   *H04N 7/18* (2006.01)
*H04N 5/372* (2011.01)   *H04N 5/374* (2011.01)

(21) Numéro de dépôt: **13193194.1**

(22) Date de dépôt: **15.11.2013**

(54) **Procédé et système de détermination en temps réel d'un nombre de signaux à sommer**

Verfahren und System zur Echtzeitbestimmung einer Anzahl zu summierender Signale

Method and system for the real-time determination of a number of signals to be summed

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.11.2012 FR 1203072**

(43) Date de publication de la demande:
**21.05.2014 Bulletin 2014/21**

(73) Titulaire: **Thales**
**92200 Neuilly Sur Seine (FR)**

(72) Inventeurs:
• **Pigouche, Olivier**
**06130 Grasse (FR)**

• **Blanc, Jean-François**
**06210 Mandelieu (FR)**
• **Renard, Christophe**
**31100 Toulouse (FR)**
• **Mur, Jean-Philippe**
**06210 Mandelieu-La-Napoule (FR)**

(74) Mandataire: **Priori, Enrico et al**
**Marks & Clerk France**
**Conseils en Propriété Industrielle**
**Immeuble «Visium»**
**22, avenue Aristide Briand**
**94117 Arcueil Cedex (FR)**

(56) Documents cités:
JP-A- 2010 093 331     US-A1- 2003 193 589
US-A1- 2011 234 877

EP 2 733 929 B1

**Description**

La présente invention concerne le domaine de l'acquisition d'images optiques. Elle s'applique en particulier aux satellites pour lesquels l'acquisition d'image est réalisée par un capteur optique constitué d'un ensemble de détecteurs optiques placés côte à côte et formant une matrice.

Il est connu, dans l'état de la technique, d'utiliser l'expression pixel pour désigner l'information, représentative d'une portion de l'image, reçue d'un de ces détecteurs.

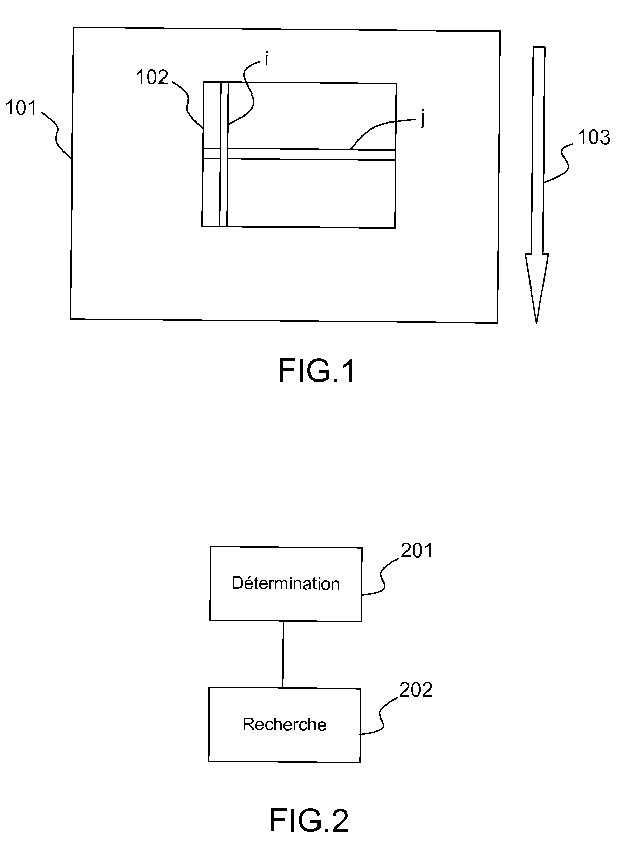

Dans le cadre de cette invention on considère plus particulièrement les systèmes connus sous le nom anglais de « push-broom ». Dans ces systèmes, représentés sur la figure 1, l'image acquise 101 par le capteur 102 défile dans une direction connue avec une vitesse connue 103. Ce défilement de l'image est provoqué par exemple par le déplacement du satellite. Chaque détecteur optique appartient à une colonne notée *i* et à une ligne notée *j*. Du fait du déplacement de l'image, une portion de l'image est vue successivement par les détecteurs d'une même colonne *i*. Un dispositif de traitement permet de sommer, par colonne, les informations reçues en provenance de différentes lignes et suivant un temps de sommation donné. Il est connu aussi dans l'état de la technique de parler d'intégration pour cette somme. Cette fonctionnalité est aussi connue sous le nom de TDI acronyme de « Time Delay Intégration » en anglais.

Il est connu des systèmes d'acquisition optique dont le capteur utilise une technologie de fabrication de type CCD acronyme de « Charge-Coupled Device » en anglais. Cependant ces systèmes d'acquisition optique ne permettent pas de faire varier le nombre de lignes servant à effectuer la somme en fonction de la localisation de la colonne sur la matrice ayant une fonctionnalité TDI. De plus les systèmes d'acquisition optique utilisant cette technologie de fabrication ne permettent pas de prendre en compte précisément les variations et distorsions présentes en particulier sur les lentilles placées avant le capteur optique. En effet avec cette technologie le nombre de lignes sommées est identique pour toutes les colonnes de la matrice ayant une fonctionnalité TDI et ne prend pas en compte les variations de qualité image sur la longueur des détecteurs.

Il est également connu des systèmes d'acquisition optique dont le capteur utilise la technologie de fabrication de type CMOS acronyme de « Complementary Métal Oxide Semiconductor » en anglais. Il est connu de choisir le temps de sommation à partir d'une information représentative de la luminance reçue par le détecteur de la première ligne, ceci afin de maximiser la qualité de l'image acquise. Dans le cas où l'information reçue du détecteur de la première ligne n'est pas représentative des informations reçues des autres détecteurs de l'image, la détermination n'est alors pas bonne pour le reste de l'image. Il est aussi connu de déterminer le temps de somme afin de maximiser une fonction constituée du couple formé par la fonction de transfert de modulation connue aussi sous l'acronyme de FTM et du rapport signal sur bruit ou SNR pour Signal to Noise Ratio en anglais pour une valeur de luminance de référence donnée. La fonction de transfert de modulation ou FTM qualifie la netteté de l'image, et le rapport signal sur bruit qualifie le bruit de l'image. Cependant, comme cette détermination est réalisée en usine à partir du détecteur du système d'acquisition optique correspondant à la qualité d'image moyenne ou minimum sur le détecteur, la transmission de l'optique donc le SNR ainsi que sa FTM variant le long du détecteur. Cette détermination ne permet pas de s'adapter aux variations des conditions de réception.

De plus, US 2003/0193589 A1 divulgue un capteur d'image de type "time delay intégration" et divulgue d'optimiser des paramètres reliés à un tel capteur.

L'invention vise donc à proposer un procédé alternatif pour la détermination du temps de sommation associé à un détecteur.

A cet effet, l'invention a pour objet un procédé selon la revendication 1.

Le procédé comporte une étape de détermination d'une valeur représentative d'une fonction de transfert de modulation et d'un rapport signal sur bruit ou SNR de la portion d'image, à partir d'une localisation d'un des détecteurs et d'un signal représentatif d'une portion d'image obtenue desdits détecteurs. Cette valeur représentative dépend du nombre. Le procédé comporte aussi une étape de recherche du nombre et du temps maximisant la valeur représentative.

Le procédé permet donc d'obtenir une valeur du nombre de sommes permettant de faire un compromis entre la netteté de l'image et le rapport signal sur bruit final de l'image.

Avantageusement, la valeur représentative est obtenue par multiplication de la fonction de transfert de modulation et du rapport signal sur bruit associés à l'image.

Avantageusement le procédé comporte en outre une étape de déplacement du capteur optique par rapport à l'image. Le déplacement est réalisé dans un axe dont la valeur absolue de l'angle entre l'axe et une colonne du capteur optique est inférieure à un seuil. L'étape de détermination est adaptée pour la détermination de la valeur représentative en outre à partir de la vitesse.

Le seuil a une valeur préférentielle de 5°.

Avantageusement, le procédé comporte une étape de mémorisation du nombre et du temps associée à la localisation du détecteur et à une valeur représentative d'un signal représentatif d'une portion d'image obtenue du détecteur.

Avantageusement l'étape de détermination est adaptée pour utiliser des données en provenance d'un Système de Contrôle d'Attitude et d'Orbite et/ou en provenance de capteurs diffusant des données représentatives d'une distorsion optique d'au moins une lentille et/ou d'au moins un miroir placés en amont dudit capteur optique, d'une valeur représentative d'une fonction de transfert de modulation de ladite lentille et/ou dudit miroir, du pilotage d'un satellite, sur lequel est embarqué ledit capteur optique, et/ou du suivi desdites consignes de pilotage.

Avantageusement le signal représentatif d'une portion d'image est obtenu en outre à partir d'au moins un autre capteur optique acquérant ledit signal dans une autre bande de fréquence et/ou en utilisant un autre pas d'acquisition.

Cette sélection d'une bande de fréquence est réalisée par un filtre optique placé devant le capteur.

La présente invention a aussi pour objet un système selon la revendication 7.

L'invention sera mieux comprise et d'autres avantages apparaîtront à la lecture de la description détaillée des modes de réalisation donnés à titre d'exemple sur les figures suivantes.

la figure 1, présente un système d'acquisition optique
la figure 2 présente le procédé selon un premier aspect de l'invention
la figure 3 présente le procédé selon un deuxième aspect de l'invention
la figure 4 présente le début d'une colonne d'un détecteur CMOS

Le procédé, tel que présenté figure 1, permet donc de déterminer un paramètre $K_t(i)$ qui dépend du nombre de sommes, suivant la colonne $i$ du capteur ayant une fonctionnalité TDI, du temps d'échantillonnage et du temps d'intégration de la scène sur les $N(i) - N_0$ pixels physiques de la colonne $i$ de la matrice ayant une fonctionnalité TDI. $N_0$ est le nombre de premières lignes qui servent à avoir une évaluation du signal de la portion d'image observée. Le temps d'échantillonnage est obtenu par la division du pas dans la direction des colonnes par la vitesse de défilement de la scène. Le procédé permet aussi de déterminer un paramètre $N(i)$ qui représente le nombre de lignes utilisées pour faire la somme suivant la colonne $i$ du capteur. En effet pour une zone de la scène correspondant à la surface d'un pixel défilant sur la colonne $i$ de la matrice ayant une fonctionnalité TDI, l'éclairement reçue est supposée être identique sur cette colonne mais varie dans le champ. $K_t(i)$ est de manière plus précise défini comme étant le rapport entre le temps d'intégration $T_{int}$ associé à une colonne $i$ et le temps d'échantillonnage $T_e$ pour le détecteur de la colonne $i$ du capteur.

Le choix de ces deux paramètres $K_t(i)$ et $N(i)$ est réalisé pour maximiser un paramètre dépendant de la fonction de transfert de modulation ou FTM et du rapport signal sur bruit ou SNR. Lorsque le temps d'intégration ou le nombre de lignes utilisées pour faire cette somme augmentent, le rapport signal sur bruit augmente et la fonction de transfert de modulation diminue. Cette optimisation est réalisée pour chaque colonne de pixel physique de la matrice ayant une fonctionnalité TDI du capteur référencée par $i$ le numéro de la colonne du capteur et j le numéro de la ligne de l'image.

La FTM est composée d'une partie dépendant de la fonction de transfert de modulation d'au moins une lentille et/ou d'au moins un miroir placés en amont dudit capteur optique et d'une partie dépendant des signaux à sommer.

En d'autres termes la FTM ne dépend pas en effet du signal qu'on observe (linéarité supposée au premier ordre), mais elle dépend de :

- la FTM optique dépend de toute l'optique du télescope en amont de la matrice
- la FTM de filé dépend du déplacement théorique de la scène par rapport à la matrice
- la FTM de désynchronisation dépend du temps passé dans la colonne $i$ de la matrice a sommer et donc du nombre de détecteurs a sommer $N(i)$ dans la colonne et du déplacement réel de la scène

Parmi les méthodes utilisées pour réaliser cette optimisation, on peut utiliser plusieurs méthodes d'analyse numériques, on peut aussi discrétiser le domaine de recherche, calculer les valeurs de la fonction à optimiser en ces points et en déduire une approximation des paramètres optimaux.

Le procédé est implémenté dans un dispositif de traitement d'images. Ce dispositif est relié au capteur optique afin de recevoir les informations représentatives de l'image.

D'une manière générale on optimise une fonction qui dépend du SNR et de la FTM sous la contrainte que le SNR soit supérieur à une valeur minimale SNRmin et que la FTM soit comprise entre deux bornes minimum et maximum ce qui implique que les valeurs des paramètres $K_t(i)$ et $N(i)$ sont contraintes et doivent appartenir respectivement à un intervalle $[K_{t_{min}} K_{t_{max}}]$ et à un intervalle $[N_{min} N_{max}]$, avec $N_{min} > N_0$. $N_0$ est le nombre de lignes physique de la matrice ayant une fonctionnalité TDI utilisée pour évaluer le signal reçu, cette évaluation du signal reçu dans la colonne $i$ de la matrice ayant une fonctionnalité TDI étant ensuite utilisée dans le calcul du SNR.

Le procédé tel que présenté figure 2 comporte deux étapes. Une étape 201 de détermination d'une valeur représentative d'une fonction de transfert de modulation et/ou d'un rapport signal sur bruit de l'image. Cette valeur représentative est obtenue pour chaque détecteur et dépend de la localisation du détecteur et du signal représentatif de la portion d'image reçue du détecteur. La valeur représentative dépend aussi du paramètre $K_t(i)$ qui dépend du temps d'intégration, temps durant lequel le pixel physique $i$ du détecteur acquiert les photons qui servent à l'évaluation du signal image, suivant la colonne $i$ du capteur et du temps d'échantillonnage du signal image. La valeur dépend aussi du paramètre *N(i)* qui représente le nombre de lignes physiques utilisées pour faire la somme suivant la colonne *i* du capteur. Le procédé comporte aussi une étape 202 de recherche de la valeur du paramètre $K_t(i)$ et/ou du paramètre *N(i)* qui maximise la valeur représentative d'une fonction de transfert de modulation et/ou d'un rapport signal sur bruit de l'image.

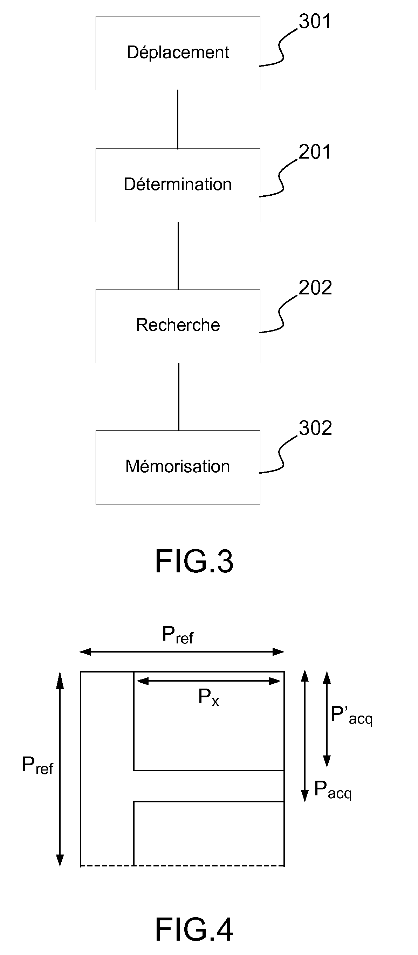

Le procédé tel que présenté figure 3 comporte aussi une étape 301 de déplacement du capteur optique par rapport à l'image et une étape 302 de mémorisation de la somme associée (plus précisément le paramètre $K_t(i)$ et/ou le paramètre *N(i)*) à la localisation du détecteur et à une valeur représentative d'un signal représentatif d'une portion d'image obtenue du détecteur

La valeur du paramètre FTM, pour un détecteur d'une colonne *i*, dépend de la valeur des paramètres $K_t(i)$ et *N(i),* et de paramètres connus au moment de l'acquisition de l'image dus à la distorsion optique, dont l'impact peut être calculée par des analyses optiques au sol et téléchargé dans le dispositif avant l'acquisition de la scène , à l'angle de visée, à la loi de pilotage, dont l'impact peut être calculé par des analyses cinématiques et téléchargé dans le dispositif avant l'acquisition de la scène, au suivi de la loi de pilotage par l'intermédiaire de données qui peuvent soit provenir en temps réel du Système de Contrôle d'attitude et d'Orbite du porteur soit provenir d'analyses cinématiques et être téléchargés avant l'acquisition de la scène, et aux micro-vibrations, par l'intermédiaire de données qui peuvent provenir d'analyses mécaniques et peuvent être télécharger avant l'acquisition de la scène ou qui peuvent provenir en temps réel des capteurs présents à bord du satellite.

La valeur du paramètre SNR, pour un détecteur d'une colonne *i*, dépend de la valeur des paramètres $K_t(i)$ et *N(i),* de paramètres systèmes notés *A(i)*, *B(i)* et *C(i)* et de la valeur du signal image *S(i,j)*. *S(i,j)* est obtenu par transformation de l'information représentative d'une portion de l'image reçue du détecteur de la colonne *i* et de la ligne *j*. *A(i)* est le coefficient qui représente la composante du bruit devant la composante du bruit proportionnelle au signal, *B(i)* représente le coefficient devant la composante du bruit proportionnelle à la racine carrée du signal, *C(i)* représente le coefficient de la composante indépendante du signal.

Le dispositif implémentant le procédé de l'invention dispose donc d'un moyen d'évaluation du signal *S(i,j)* obtenu avant l'ajustement de la valeur des paramètres $K_t(i)$ et *N(i)*. Ce moyen d'évaluation fournit une mesure du signal *S(i,*j) qui peut être moins bien résolue ou plus bruitée que la mesure après sommation. *S(i,j)* peut par exemple être le signal obtenu dans la ou les $N_0$ premières lignes ($N_0$ est connu et fixé par le design du système) du capteur optique et ayant subi une somme avec un nombre fixe de lignes dépendant du paramètre $K_{t0}$. $K_{t0}$ est un paramètre du système de détection et représente le temps d'intégration élémentaire (correspondant à une ligne) sur le temps d'échantillonnage pour les $N_0$ premières lignes

*S(*i,j) peut aussi être un signal fourni par un autre capteur pouvant acquérir un signal dans une autre bande de fréquence et dont l'acquisition se fait avant l'acquisition par le capteur CMOS. Par exemple dans le cas où les détecteurs de cet autre capteur sont placés avant les détecteurs CMOS, grâce à leurs positions dans le plan focal et du fait de l'orientation et de la vitesse de défilement de la scène.

Donc suite à l'acquisition d'une information représentative d'une portion de l'image par un détecteur (détecteur localisé colonne *i* ligne *j*), cette information est transformée afin d'obtenir le signal *S(i,j)* et on détermine ensuite les valeurs des paramètres $K_t(i)$ et *N(i)* qui optimisent la fonction F(FTM,SNR).
La FTM dépend des variables fréquences spatiales $f_x$ et $f_y$ exprimées en pixels$^{-1}$ et de *i* le numéro de la colonne à laquelle appartient le détecteur. En général on calcule la valeur de FTM pour les couples ($f_x$ = 0.5 *pixel*$^{-1}$, $f_y$=0) et ($f_x$ = 0, $f_y$ = 0.5 *pixel*$^{-1}$) mais on peut choisir d'autres valeurs de fréquences pour optimiser la qualité de l'image.
$FTM(i, f_x, f_y)$
$= FTM_{optique}(i, f_x, f_y). FTM_{statique}(f_x, f_y). FTM_{filé}(f_x, f_y). FTM_{desynchronisation}(i, f_x, f_y)$ avec $FTM_{optique}(i, f_x, f_y)$ la FTM de l'optique dépendant du télescope monté sur le satellite. Les valeurs de FTM de l'optique peuvent provenir de mesures, d'analyses optiques ou de capteurs placés à bord du satellite.

$$FTM_{statique}\left(f_x, f_y\right) = FTM_{diffusion}\left(i, f_x, f_y\right) * \operatorname{sinc}\left(\pi \frac{P_x}{P_{ref}} f_x\right) *$$

$$\operatorname{sinc}\left(\pi \frac{P'_{acq}}{P_{ref}} f_y\right) \text{ avec } \operatorname{sinc}(x) = \frac{\sin x}{x}$$

La figure 4 présente le début d'une colonne d'un détecteur CMOS, la zone en blanc représente la surface photosensible du détecteur et les paramètres $P_{acq}$, $P_x$ et $P_{ref}$ sont représentés sur cette figure. $FTM_{diffusion}(i, f_x, f_y)$ est la FTM de diffusion. La valeur de la FTM de diffusion est connue par des mesures qui sont réalisées sur le satellite avant sa mise en orbite.

$$FTM_{filé}\big(f_x, f_y\big) = \text{sinc}\left(\pi * K_{t_{moy}}(i) * f_y\right)$$

On définit alors $K_t(i)$ comme étant le rapport entre le temps d'intégration $T_{int}$ d'une ligne et le temps d'échantillonnage $T_e$ qui correspond à $P_{ref}$ pour le détecteur de la colonne $i$ du capteur.

On Pose alors $K_{t_{moy}}(i) = \frac{N_0 K'_{t0} + (N(i) - N_0) K_t(i)}{N(i)}$ avec $N(i)$ qui est le nombre de lignes utilisées pour la somme des informations reçues des détecteurs de la colonne $i$ du capteur.

$$FTM_{desynchronisation}\big(i, f_x, f_y\big) = G_x\big(i, N(i), f_x\big) * G_y\big(i, N(i), f_y\big)$$

FTM$_{desynchronisation}$ représente la FTM due à la désynchronisation de la vitesse de la scène par rapport au fonctionnement du TDI.

$Gx(i,N(i), f_x)$ est donné pour l'axe $x$ (perpendiculaire a une colonne) du plan focal, le détecteur $i$ et le nombre de pixels à sommer $N$, pour la fréquence spatiale fx (n'oublions pas que la valeur de FTM (fonction de transfert de modulation) est donnée pour chaque fréquence spatiale),

$Gx(i, N(i), f_x)$ est la composante de la FTM de désynchronisation suivant cet axe due au fait que la vitesse de défilement réelle et son orientation pendant la durée d'intégration et de sommation pour les $N(i)$ pixels dans la colonne du signal de la scène qui défile sur la matrice, s'écarte de la valeur et de la direction théorique où cette vitesse est parfaitement synchronisée avec le défilement de ce point et la direction parfaitement le long de la colonne de la matrice

$Gy(i, N(i), f_y)$ : idem pour l'axe y (le long d'une colonne)

En d'autres termes une approximation de $G_x$ et $G_y$ est donnée ci-dessous dans le cas où le signal $S(i,j)$ provient des $N_0$ premières lignes acquises avec le paramètre $K_{t0}$.

$$G_x(i, N, f_x) \sim \frac{\sin\left(\pi \tan\big(g(i)\big) N(i) K_{t_{moy}}(i) f_x\right)}{N(i) \text{sinc}\left(\pi \tan\big(g(i)\big) K_{t_{moy}}(i) f_x\right)}$$

Dans cette équation $g(i)$ est l'angle de glissement total. Cet angle représente l'angle par rapport à la colonne $i$ de la matrice ayant une fonctionnalité TDI de la vitesse de défilement de la scène dans le plan focal de l'instrument. Cet angle est la somme de l'influence des termes élémentaires suivants :

- la distorsion optique téléchargée avant l'acquisition de la scène à partir d'analyses optiques et de mesures effectuées avant lancement,
- le pilotage de la ligne de visée dont les caractéristiques peuvent être téléchargées avant l'acquisition de la scène à partir d'analyses cinématiques,
- le suivi des consignes de pilotage de la ligne de visée dont les caractéristiques peuvent être téléchargées avant l'acquisition de la scène à partir d'analyses cinématiques ou peuvent provenir de données temps réels du Système de Contrôle d'Attitude et d'Orbite (connu aussi sous le nom anglais de Attitude and Orbit Control System ou AOCS) du vecteur porteur. Le Système de Contrôle d'Attitude et d'Orbite est un ensemble d'équipements et de logiciels de bord qui assure la fonction de pilotage d'un engin spatial en vue de lui imposer l'attitude voulue et d'ajuster son orbite aux exigences de la mission.
- les micro-vibrations dont les caractéristiques peuvent provenir d'analyses mécaniques téléchargées avant l'acquisition de la scène ou de données temps réel de capteurs embarqués à bords du vecteur porteur.

En d'autres termes la distorsion optique du télescope, le pilotage du satellite et le suivi des consignes rentrent directement dans l'expression de la FTM de désynchronisation dans les termes $Gx$ et $Gy$ car ils interviennent directement dans le calcul de la vitesse réelle de défilement V(i) et de son orientation (angle de glissement $g(i)$).

$G_y$ peut-être approximé de la manière suivante :

$$G_y\left(i, N, f_y\right) \sim \frac{\sin\left(\pi\left(V(i) - 1\right) N(i) K_{t_{moy}}(i) f_x\right)}{N(i)\operatorname{sinc}\left(\pi\left(V(i) - 1\right) K_{t_{moy}}(i) f_x\right)}$$

*V(i)* est la vitesse défilement de la scène sur la matrice ayant une fonctionnalité TDI, pour un détecteur de la colonne *i* du capteur, et elle est représentée sur la figure 1 par l'élément 103. Compte tenu de la distorsion optique de l'instrument cette vitesse dépend du numéro *i* de la colonne dans la matrice ayant une fonctionnalité TDI. Cette vitesse est exprimée en pixels divisés par un temps. Cette vitesse est obtenue a partir de la vitesse du satellite sur son orbite, de la loi de pilotage, des vitesses angulaires des angles d'Euler du satellite qui peuvent être téléchargées avant l'acquisition de la scène à partir d'analyses ou obtenus en temps réel par le Système de Contrôle d'Attitude et d'Orbite à bord du vecteur porteur, des caractéristiques des micro-vibrations téléchargées avant l'acquisition de la scène à partir d'analyse mécaniques ou obtenues par des capteurs à bords du vecteur porteur en temps réel et des caractéristiques de l'optique, focale et distorsion, téléchargées avant l'acquisition de la scène à partir d'analyses optiques et de mesures effectuées avant le lancement.

En considérant que le signal *S(i,j)* est reçu par le détecteur localisé colonne *i* et provenant de la ligne *j*, de la scène, alors le paramètre SNR est modélisé ainsi. Ce signal est acquis avec un paramètre $K_{t0}$, pour les $N_0$ premières lignes. Le bruit dans le signal dépend de la somme quadratique suivante :

$$\sqrt{A(i)\left(\frac{K_t(i)}{K_{t0}} S(i,j)\right)^2 + B(i)\left(\frac{K_t(i)}{K_{t0}} S(i,j)\right) + C(i)^2}$$

Cette expression représente un bruit de lecture qui est proportionnel à la valeur du signal, au bruit photonique et à un bruit indépendant du signal. Ce bruit indépendant inclus le bruit d'obscurité et le bruit de quantification. Donc pour les *N(i)* lignes servant à la somme, le bruit a la valeur suivante :

$$Bruit\left(N(i), K_t(i), S(i,j)\right)$$

$$= \sqrt{\left(N(i) - N_0\right)\left[A(i)\left(\frac{K_t(i)}{K_{t0}} S(i,j)\right)^2 + B(i)\left(\frac{K_t(i)}{K_{t0}} S(i,j)\right) + C(i)^2\right] + N_0\left[A(i)S(i,j)^2 + B(i)S(i,j) + C(i)^2\right]}$$

Par conséquent la valeur du rapport signal sur bruit est la suivante :

$$SNR\left(N(i), K_t(i), S(i,j)\right) = \left[N_0 + \left(N(i) - N_0\right)\frac{K_t(i)}{K_{t0}}\right]\frac{S(i,j)}{Bruit\left(N(i), K_t(i), S(i,j)\right)}$$

Si la fonction *F(FTM,SNR)* à optimiser est le produit *FTM*SNR* alors, les expressions de $FTM_{optique}$ *(i, $f_x$, $f_y$)* et $FTM_{statique}$*($f_x$,$f_y$)* sont indépendantes de *N(i)* et de $K_t(i)$. Ceci peux permettre de simplifier l'expression à optimiser qu'on obtient a partir du produit des fonctions précédentes.

Les valeurs des paramètres $K_t(i)$ et *N(i)* sont discrètes et le nombre de valeurs est fini. Il est donc possible de calculer la fonction *F(FTM,SNR)* pour l'ensemble de ces valeurs et ensuite de trouver le couple *($K_t(i)$,N(i))* qui maximise la fonction *F(FTM,SNR),* ce couple dépendant de *S(i,j)* et de *i.* Comme cette optimisation doit être réalisée en temps réel, il est possible également de calculer, pour l'ensemble des valeurs de *S(i,j)* et de *i,* la valeur optimale du couple *($K_t(i)$,N(i))* comme décrit ci-dessus. Ces données sont alors placées dans une table et pour accélérer la lecture de ces tables il est possible de considérer que les valeurs du couple du couple *($K_t(i)$,N(i))* sont constantes pour une plage d'indices *i* proches et pour une plage de valeurs du signal *S(i,j)* proches.

Il est également possible que le dispositif utilisant ce procédé transmette en, plus des informations représentatives de l'image, les caractéristiques d'acquisition du détecteur *(i,j).* C'est-à-dire en particulier le nombre de lignes *N(i)* ayant servi à la somme ou bien le paramètre $K_t(i)$ ayant servi à faire cette somme durant l'acquisition des informations par le détecteur (*i,j*). La transmission de ces données est utile pour l'étalonnage et l'égalisation radiométrique qui corrige les disparités radiométriques entre les pixels de l'image.

## Revendications

1. Procédé de détermination en temps réel ;

   • d'un nombre de signaux à sommer parmi un ensemble de signaux représentatifs d'une portion d'image respectivement reçus d'un ensemble de détecteurs appartenant à un même capteur optique, lesdits détecteurs étant organisés en une matrice constituée de lignes et de colonnes, lesdites signaux à sommer étant reçus sur une même colonne
   • et du temps d'intégration durant lequel lesdits détecteurs doivent acquérir lesdits signaux à sommer,

   ledit procédé comportant :

   - une étape (201) de détermination d'une valeur représentative, mise en oeuvre dans chaque dite colonne, d'une fonction de transfert de modulation et d'un rapport signal sur bruit de portion d'image, à partir d'une localisation d'un des détecteurs et d'un signal représentatif d'une portion d'image obtenu desdits détecteurs, ladite valeur représentative dépendant dudit nombre,
   - une étape (202), mise en oeuvre dans chaque dite colonne, de recherche dudit nombre et dudit temps maximisant ladite valeur représentative

2. Procédé selon la revendication 1 dans lequel ladite valeur représentative est obtenue par multiplication de ladite fonction de transfert de modulation et dudit rapport signal sur bruit de ladite portion d'image.

3. Procédé selon la revendication 1 ou 2 comprenant :

   - une étape de déplacement (301) dudit capteur optique par rapport à l'image, ledit déplacement étant réalisé dans un axe dont la valeur absolue de l'angle entre ledit axe et une colonne du capteur optique est inférieure à un seuil ;

   ladite étape de détermination étant adaptée à la détermination de ladite valeur représentative, en outre à partir de la vitesse de défilement de la scène.

4. Procédé selon l'une des revendications 1 à 3 comportant en outre ;

   - une étape de mémorisation (302) dudit nombre et dudit temps associée à ladite localisation dudit détecteur et à une valeur représentative dudit signal représentatif d'une portion d'image obtenue dudit détecteur

5. Procédé selon l'une des revendications 1 à 4 dans lequel ladite étape de détermination est adaptée pour utiliser des données en provenance d'un Système de Contrôle d'Attitude et d'Orbite et/ou en provenance de capteurs diffusant des données représentatives :

   - d'une distorsion optique d'au moins une lentille et/ou d'au moins un miroir placés en amont dudit capteur optique,
   - d'une valeur représentative d'une fonction de transfert de modulation de ladite lentille et/ou dudit miroir,
   - du pilotage d'un satellite sur lequel est embarqué ledit capteur optique et/ou
   - du suivi de consignes de pilotage.

6. Procédé selon l'une des revendications précédentes dans lequel ledit signal représentatif d'une portion d'image est obtenu en outre à partir d'au moins un autre capteur optique acquérant ledit signal dans une autre bande de fréquence et/ou en utilisant un autre pas d'acquisition.

7. Système comportant:

   - au moins un capteur optique constitué d'un ensemble de détecteurs
   - des moyens de traitement aptes à mettre en oeuvre le procédé selon l'une des revendications 1 à 6.

**Patentansprüche**

1. Verfahren zur Echtzeitbestimmung:

   • einer Anzahl zu summierender Signale aus einer Gesamtheit an für einen Bildanteil repräsentativen Signalen, die jeweils von einer Gesamtheit an Detektoren, die zu ein und demselben optischen Sensor gehören, erhalten werden, wobei die Detektoren in einer Matrix aus Zeilen und Spalten organisiert sind und wobei die zu summierenden Signale auf einer einzigen Spalte erhalten werden,
   • und der Integrationszeit, während der die Detektoren die zu summierenden Signale erkennen müssen,

   wobei das Verfahren die folgenden Schritte umfasst:

   - einen Schritt (201), der in jeder der Spalten umgesetzt wird, um einen repräsentativen Wert, eine Modulationsübertragungsfunktion und ein Signal-Rausch-Verhältnis des Bildanteils, ausgehend von einer Lokalisierung eines der Detektoren und von einem für einen Bildanteil repräsentativen Signal, das von den Detektoren erhalten wird, zu bestimmen, wobei der repräsentative Wert von der Anzahl abhängig ist,
   - einen Schritt (202), der in jeder der Spalten umgesetzt wird, um die Anzahl und die Zeit, die den repräsentativen Wert maximieren, zu bestimmen

2. Verfahren nach Anspruch 1, bei dem der repräsentative Wert durch Multiplikation der Modulationsübertragungsfunktion und des Signal-Rausch-Verhältnisses des Bildanteils erhalten wird.

3. Verfahren nach Anspruch 1 oder 2, umfassend:

   - einen Schritt zur Verschiebung (301) des optischen Sensors gegenüber dem Bild, wobei die Verschiebung auf einer Achse erfolgt, deren Absolutwert des Winkels zwischen der Achse und einer Spalte des optischen Sensors unterhalb eines Schwellenwerts liegt;

   dabei ist der Bestimmungsschritt zur Bestimmung des repräsentativen Werts außerdem auch ausgehend von der Bildgeschwindigkeit geeignet.

4. Verfahren nach einem der Ansprüche 1 bis 3, außerdem umfassend:

   - einen Schritt zur Speicherung (302) der Anzahl und der Zeit in Verbindung mit der Lokalisierung des Detektors und einem repräsentativen Wert des für einen Bildanteil repräsentativen Signals, der vom Detektor erhalten wird.

5. Verfahren nach einem der Ansprüche 1 bis 4, bei dem der Bestimmungsschritt geeignet ist, um Daten von einem AOCS (Attitude and Orbit Control System) und/oder von Sensoren zu verwenden, die Daten entsenden, die repräsentativ sind:

   - für eine optische Verzerrung von zumindest einer Linse und/oder von zumindest einem Spiegel, der/die vor dem optischen Sensor angeordnet ist/sind,
   - für einen repräsentativen Wert einer Modulationsübertragungsfunktion der Linse und/oder des Spiegels,
   - für die Steuerung eines Satelliten, in dem der optische Sensor eingebaut ist und/oder
   - für die Verfolgung von Steuerungsvorgaben.

6. Verfahren nach einem der vorangehenden Ansprüche, bei dem das für einen Bildanteil repräsentative Signal außerdem von zumindest einem weiteren optischen Sensor erhalten wird, der das Signal auf einem anderen Frequenzband und/oder unter Verwendung eines anderen Erfassungsschritts erfasst.

7. System umfassend

   - zumindest einen optischen Sensor, bestehend aus einer Gesamtheit an Detektoren,
   - geeignete Bearbeitungsmittel, um das Verfahren nach einem der Ansprüche 1 bis 6 umsetzen zu können.

**Claims**

1. Method for determining in real-time;

   • a number of signals to be summed among a set of representative signals of an image portion which are respectively received from a set of detectors which belong to the same optical sensor, the detectors being organised in a matrix which is constituted by lines and columns, the signals to be summed being received in the same column,
   • and the integration time during which the detectors must acquire the signals to be totalled,

   the method comprising:

   - a step (201) of determining a value which is carried out in each column and which is representative of a modulation transfer function and a signal-to-noise ratio of the image portion, from a location of one of the detectors and a representative signal of an image portion obtained from the detectors, the representative value depending on the said number,
   - a step (202), carried out in each column, of searching for the said number and the said time which maximises the said representative value.

2. Method according to claim 1, in which the said representative value is obtained by multiplication of the said modulation transfer function and the said signal-to-noise ratio of the image portion.

3. Method according to claim 1 or 2 comprising:

   - a step (301) of moving the optical sensor relative to the image, the movement being carried out in an axis whose absolute value of the angle between the axis and a column of the optical sensor is less than a threshold;

   the determination step being configured for determining the said representative value from the scrolling speed of the scene.

4. Method according to any one of claims 1 to 3, further comprising;

   - a step (302) of storing the number and the time associated with the location of the detector and a value which is representative of the signal which is representative of an image portion obtained of the detector.

5. Method according to any one of claims 1 to 4, wherein the determination step is configured for using data originating from an Attitude and Orbit Control System and/or originating from sensors which transmit data which are representative of:

   - an optical distortion of at least one lens and/or at least one mirror which are placed upstream of the optical sensor,
   - a representative value of a modulation transfer function of the lens and/or the mirror,
   - the control of a satellite on-board which the optical sensor is fitted and/or
   - the monitoring of control instructions.

6. Method according to any one of the preceding claims, wherein the signal which is representative of an image portion is further obtained from at least one other optical sensor which acquires the signal in another frequency band and/or using another acquisition step.

7. System comprising:

   - at least one optical sensor which is constituted by a group of detectors,
   - processing means which are capable of implementing the method according to any one of claims 1 to 6.

FIG.1

FIG.2

FIG.3

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030193589 A1